# EUROPEAN PATENT SPECIFICATION

(11) **EP 4 245 138 B1**
(45) Date of publication and mention of the grant of the patent: **02.12.2026**
(21) Application number: 23162035.2
(22) Date of filing: 15.03.2023
(51) Int. Cl.: A01M 23/16, A01M 23/24, A01M 23/30, A01M 25/00

(54) **RODENT STATION**
NAGETIERSTATION
STATION DE RONGEUR

(30) Priority: 15.03.2022 GB 202203557
(43) Date of publication of application: 20.09.2023
(73) Proprietor: Pelsis Limited, Grimbald Crag Close Knaresborough North Yorkshire HG5 8PJ (GB)
(72) Inventor: FISH, John, Knaresborough, HG5 8PJ (GB); HOWELLS, Jonathan Robert, Knaresborough, HG5 8PJ (GB)
(74) Representative: Appleyard Lees IP LLP

(56) References cited:
- EP-A1- 3 403 499
- EP-A1- 3 473 090
- US-A1- 2013 333 273
- US-A1- 2018 325 095
- US-A1- 2021 056 298

## Description

The present invention relates to a rodent station.

Rodent stations are used to catch and eliminate rodents. Different types of traps may be provided in a rodent station, such as mechanical traps, bait traps or glue traps. Mechanical traps typically use a spring mechanism which, when triggered, quickly kills the rodent. Different traps may be used to catch different types of rodents. US2013/333273A1 describes a rodent baiting station. US2021/056298A1 describes a pest monitoring device. EP3473090A1 describes a non-target species barrier. EP3403499A1 describes a housing for a rodent station. US 2018/325095A1 describes a pest management apparatus.

One or more traps may be built into a rodent station or may be removably inserted into a rodent station. Traps may be single-use traps or may be adapted to allow a user to remove the rodent and reset the trap.

According to the present invention there is provided an apparatus as set forth in the appended claims. Other features of the invention will be apparent from the dependent claims, and the description which follows.

According to the invention, there is provided a rodent station comprising at least one opening, a catching area configured to receive at least one trap, an entrance area between the opening and the catching area, and at least one guide wall configured to provide a path through the entrance area from the opening into the catching area, wherein the at least one guide wall is movable, to alter the path into the catching area.

The movable guide wall may allow the rodent station to be configurable according to an environment or requirement. In some environments, it may be required that the path from the opening through the entrance area and into the catching area is linear, so that it is not needed for a rodent to change their direction to enter the catching area. In other environments, it may be required that the rodent takes a longer and/or non-linear path through the entrance area, which may inhibit non-target species from entering the catching area.

The movable guide wall may allow mechanical traps to be provided in the rodent station in a variety of arrangements and orientations. This may allow the rodent station to be used for catching different types of rodents.

The at least one movable guide wall may be providable in a first position. In the first position, the guide wall may be provided facing the opening. In the first position, a rodent entering through the opening will be blocked from entering the catching area by the guide wall and will be required to change direction to move past the guide wall and into the catching area.

The guide wall being provided to face the opening may form a visible barrier from the opening to obstruct the view through the opening and into the catching area. This may prevent caught rodents from being visible through the opening, which may be a deterrent to other rodents, in addition to being considered unsightly to people.

The guide wall being provided to face the opening provides a path to the catching area which requires a change in direction of the rodent through the entrance area. This may inhibit non-target species entering the catching area.

The at least one movable guide wall may be provided in a second position. In the second position, the at least one guide wall may be offset from the opening. When the guide wall is in the second position, the path from the opening to the catching area may be linear, so that it is not required that a rodent changes direction to enter the catching area. Rats are known to be neophobic in relation to environment. This means that where a trap is put down, rats will generally be wary of it and may stay away from the trap, particularly where the trap interrupts a known thoroughfare. The guide wall being positioned so that the rodent does not need to change direction on entering the opening to reach the catching area may improve a rate of catching when the rodent station is positioned on a usual path of the rodent.

In the second position, the guide wall may act as a barrier to prevent a rodent from avoiding a trigger portion of a mechanical trap when entering the catching area.

In the first and second positions, the at least one movable guide wall may extend in a width direction of the catching area. The at least one movable guide wall may be provided in a third position. In the third position, the at least one guide wall may extend in a length direction of the catching area. The at least one guide wall may partition the catching area into first and second zones.

This may allow different types of traps to be laid in the different zones. For example, a mechanical trap may be positioned so that it is triggered when the rodent enters through the opening and into the catching area without a change in direction, whilst bait may be positioned in a zone away from the opening, so that when a rodent enters through the opening and changes direction to enter the catching area, the rodent may enter the zone with the bait.

The at least one guide wall is configured to pivot. The at least one guide wall may be configured to pivot between the first position, the second position and the third position. The at least one guide wall may pivot 90 degrees between the first position and the third position. The at least one guide wall may pivot 180 degrees between the first position and the second position.

There may be provided two movable guide walls and the rodent station may comprise two openings. The first guide wall may guide the path of the rodent from the first opening to the catching area, and the second guide wall may guide the path of the rodent from the second opening to the catching area. The two openings may be provided at two ends of the rodent station, with the catching area between the two openings.

In a first configuration, the first guide wall may be positioned in the first position whilst the second guide wall may be positioned in the second position. In this configuration, rodents entering the rodent station through the first opening will be required to change direction to enter the catching area, whilst rodents entering the rodent station through the second opening will be able to enter the catching area without a change in direction.

The first configuration may be used when the rodent station is to be positioned such that the first opening may be visible to people, whilst the second opening may not be visible, for example towards a corner of a building. The first guide wall may thereby inhibit people from seeing inside the catching area through the first opening, whilst a catch rate for rodents entering through the second opening may be higher.

In a second configuration, both guide walls may be positioned in the first position. This configuration may be used in a sensitive environment, to inhibit people viewing the interior of the catching zone through both openings, and to inhibit non-target species from entering the catching area.

In a third configuration, both guide walls may be positioned in the second position. This configuration may be used in a non-sensitive environment and a catch rate may be higher than the second configuration.

In a fourth configuration, both guide walls may be positioned in the third position. The guide walls may partition the catching area into zones, which may allow different types of traps to be laid in the different zones.

The guide wall is connectable to the rodent station. The guide wall comprises a post, which may be provided on an edge of the wall. The post is connectable to the rodent station. The post is connectable to a base of the rodent station.

The rodent station comprises a boss provided on the base. The boss is configured to receive a first end of the post of the guide wall. The boss may be configured to receive the post in a press-fit connection.

The post of the guide wall is removable from the boss. In use, the guide wall may be movable between positions by removing the post from the boss, and reinserting the post into the boss in another orientation.

According to the invention, the guide wall is pivotable to move into the different positions, the post is a pivot post. The pivot post is rotatable relative to the boss. In another example, the pivot post may be received in a shaft of the guide wall, and the pivot post may be rotatable relative to the shaft.

The rodent station may comprise a plurality of bosses projecting from the base. Each of the bosses may be configured to receive the post. This may allow the guide wall to be connected to the rodent stations at different positions, by removing the post from one boss and inserting the post into another boss.

The rodent station may comprise a lid. The lid may be hingedly connected to a wall of the rodent station. The lid of the rodent station may comprise a slot for receiving an upper edge of the at least one guide wall, when the lid is in a closed position. The lid of the rodent station may comprise a plurality of slots for receiving the upper edge of the at least one guide wall, wherein the upper edge is received in a different slot of the plurality of slots according to the position of the guide wall. The one or more slots in the lid may prevent the at least one guide wall from moving when the lid is closed. The one or more slots in the lid may prevent the at least one guide wall from swinging to a different position when the lid is closed

The catching area may comprise one or more clips for connecting a mechanical trap to the rodent station. Preferably, the catching area may comprise a plurality of clips, wherein the plurality of clips are arranged at various positions to connect the mechanical trap to the rodent station at various positions and orientations. The plurality of clips may be provided around a perimeter of the catching area. In use, a mechanical trap may couple to one or more of the clips. The plurality of clips may extend into the catching area from the perimeter. The plurality of clips may be separated by spaces. The plurality of clips may be formed on a strip that may be attached to a side wall of the rodent station or a side of the catching area between the catching area and the opening.

The rodent station may comprise at least one rib projecting from a side wall. The at least one rib may form a barrier between the side wall and the guide wall. The at least one rib may also act to strengthen the rodent station.

The at least one entrance area may be a ramp. The height of the at least one entrance area may increase from the opening towards the catching area. The at least one catching area may be recessed relative to the entrance area.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic drawings in which:
Figure 1 is a perspective view of an example rodent station;
Figure 2 is a perspective view of part of the rodent station of figure 1;
Figure 3 is a perspective view of part of the rodent station of figure 1 with traps in a different orientation;
Figure 4 is a perspective view of part of the rodent station of figure 1 with the guide walls in a different position;
Figure 5 is a perspective view of part of the rodent station of figure 1 with the guide walls in a different position;
Figure 6 is a perspective view of part of the rodent station of figure 1 with the guide walls in a different position;
Figure 7 is a perspective view of part of the rodent station of figure 1;
Figure 8 is a section view of an example rodent station; and
Figure 9 is a section view of an example rodent station.

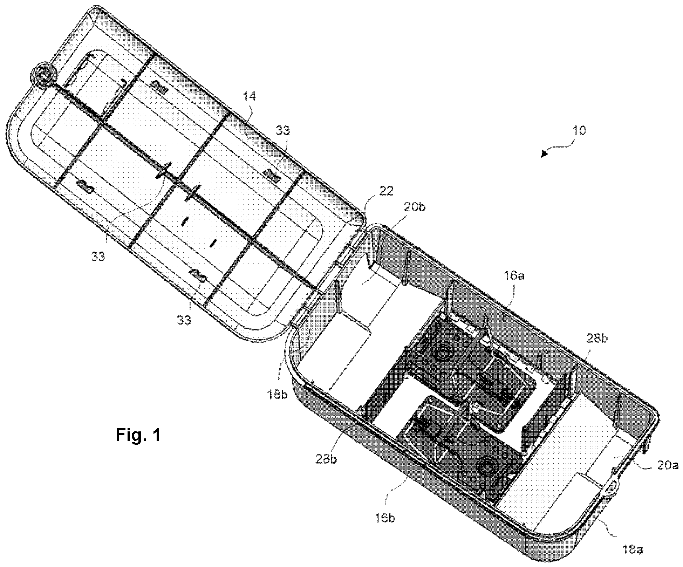

As shown in figures 1-7, an example rodent station 10 comprises a base 12, a lid 14, side walls 16a, 16b and end walls 18a, 18b. The end walls 18a, 18b extend up from the base 12 towards the lid 14 (when the lid 14 is in a closed orientation) to define a chamber in which rodent traps may be placed. Openings 20a, 20b are provided in the end walls 18a, 18b and are arranged adjacent one of the side walls 16a. The openings 20a, 20b are provided at opposite ends of the rodent station 10 in a length direction.

Rats are known to be neophobic in relation to environment and food. This means that where a trap is put down, rats will generally be wary of it and may stay away from the trap, particularly where the trap interrupts a known thoroughfare. Rats are known to typically stay close to walls while they are travelling, and so the openings being provided adjacent the side walls means that when the rodent station is placed with the side wall 16a being placed against a wall, the openings 20a, 20b may lie in the usual path of the rodent.

The lid 14 is connected to a top end of the end wall 18b, by a hinge 22. It will be appreciated that in other examples the lid may be connected by to one or more side wall or end wall by other means, or may not be connected to a side wall or end wall.

A catching area 24 is provided in a central portion of the chamber, wherein the catching area 24 is configured to receive one or more rodent traps. Between the catching area 24 and each of the openings 20a, 20b there is provided an entrance area 26a, 26b.

Movable guide walls 28a, 28b are provided between the catching area 24 and each entrance area 26a, 26b. Each guide wall 28a, 28b is arranged to guide a rodent to enter the catching area 24 at a desired location. The guide walls 28a, 28b extend upwards from the base 12 towards the lid.

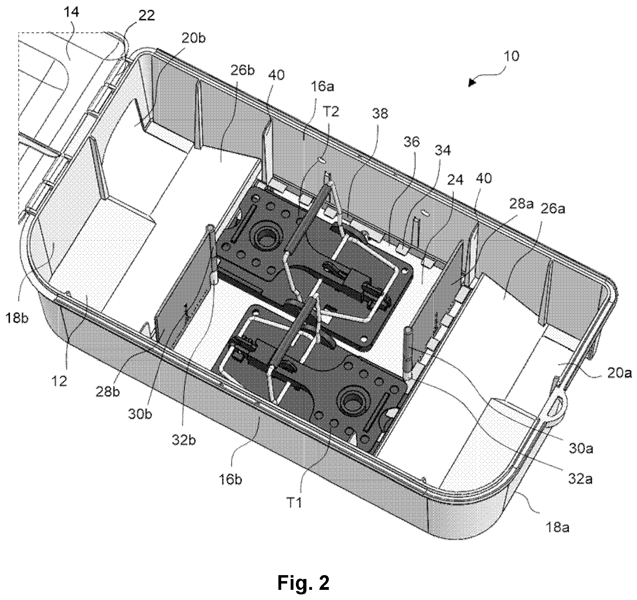

Each guide wall 28a, 28b is configured to move between various different positions, for example as shown in figures 2, 4, 5 and 6

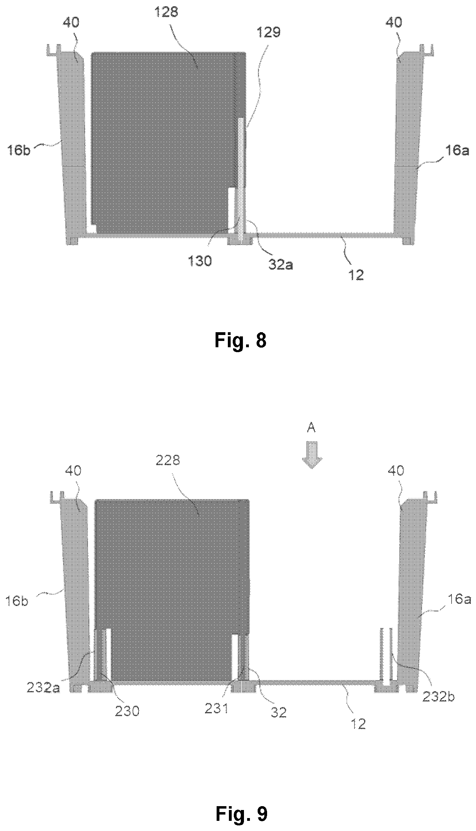

A post 30a, 30bremovably connects each of the guide walls 28a, 28b to the base 12 of the rodent station 10. In the example shown in figures 1-7, the post 30a, 30b forms part of the guide wall 28a, 28b. In other examples, the post may be removably received in a shaft of the guide wall in a press-fit connection, as shown in figure 8.

The rodent station 10 comprises connectors for removably connecting the posts 30a, 30b to the base 12 of the rodent station. The connectors include bosses 32a, 32b that project from the base 12 at the perimeter of the catching area 24. Each of the bosses 32a, 32b is configured to receive a first end of a post 30a, 30b in a press-fit connection.

The posts 30a, 30b are pivot posts, and the guide walls 28a, 28b are configured to swing about the pivot posts to move between the different positions. In the example shown in figures 1 to 7, wherein the posts 30a, 30b form part of the guide walls 28a, 28b, the posts 30a, 30b are configured to rotate relative to the bosses to pivot the guide walls.

As shown in figure 8, in another example, the guide walls 128 each comprise a shaft 129 for receiving the post 130. The end of the post 130 that extends from the shaft 129 is insertable in the bosses 32a, 32b. In some examples, the posts 130 are configured to rotate relative to the bosses 32a, 32b in order to permit the guide walls 128 to pivot, and the posts 130 are prevented from rotating relative to the shaft 129. In other examples, the pivot posts 130 are prevented from rotated relative to the bosses 32a, 32b, but are rotatable relative to the shaft 129, in order to permit the guide walls 128 to pivot. In other examples, the pivot posts 130 are rotatable relative to the bosses 32a, 32b and the shaft 129 of the guide walls 130. Although not shown, other features of the rodent station 10 of figures 1-7 are present in the rodent station shown in figure 8.

In addition to the guide walls 28a, 28b being configured to swing between various positions by pivoting about the post 30a, 30b, the guide walls 28a, 28b are also configured to be placed in various positions in the rodent station 10 by moving the post 30a, 30b to different positions. The posts 30a, 30b are removably connectable to the bosses 32a, 32b and recesses. Further bosses (not shown) and recesses are provided in other positions in the catching area 24 for receiving the posts 30a, 30b.

In the configuration shown in figures 1-7, the posts 30a, 30b are connected to the bosses 32a, 32b provided along edges of the catching area between the catching area and the entrance areas. In other examples, the posts may be connected to other bosses (not shown) provided along the edge of the catching area 24 that extends along the side walls 16a, 16b.

In some examples, the guide walls may not be pivotable but instead each guide wall may be movable to different positions by removing the post from the boss and re-inserting the post into the boss in another position or into a different boss.

In an example, shown in figure 9, bosses 232a, 232b may additionally be provided in the corners of the catching area 24. The guide walls 228 may each comprise two posts 230, 231 that may be receivable in bosses 32, 232a, 232b. In a first arrangement, as shown in figure 9, the guide wall 228 may be positioned with the posts in bosses 32, 232a. In a second arrangement, the guide wall 228 may be removed from bosses 32, 232a and may be inserted in the direction indicated by arrow A, into bosses 32, 232b. Although not shown, other features of the rodent station 10 of figures 1-7 are present in the rodent station shown in figure 9.

As shown in figure 1, the lid 14 comprises a plurality of slots 33 for receiving an upper edge of one of the guide walls 28a, 28b when the lid 14 is closed. The upper edge of the guide wall 28a, 28b will be received in different slots 33 according to the position of the guide wall 28a, 28b. The slots 33 act as a locating means and prevent the guide walls 28a, 28b from moving when the lid 14 is closed.

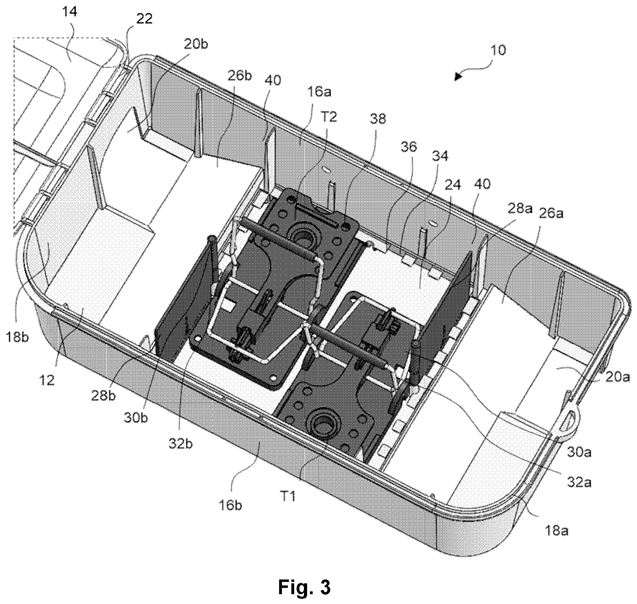

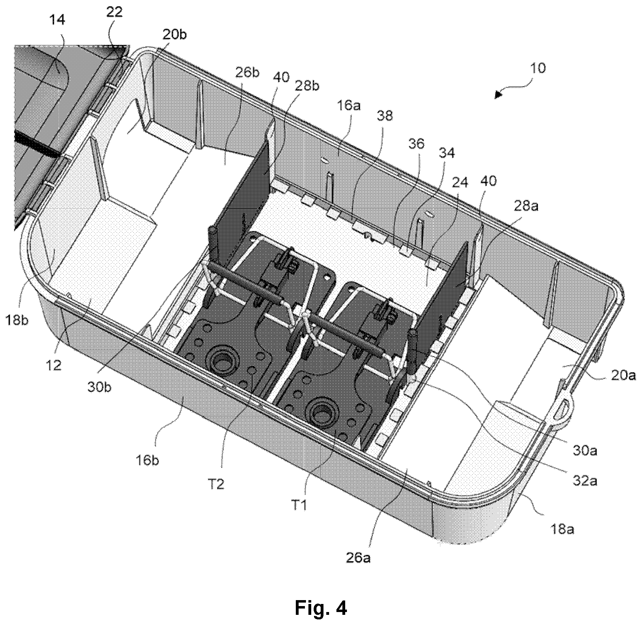

A plurality of clips 34 are provided for holding a mechanical trap in position. The clips 34 extend around the perimeter of the catching area 24, so that the mechanical traps may be held in different positions in the catching area 24. As shown in figures 1, 2 and 5, a mechanical trap may be held by clips 24 projecting from sides of the catching area 34 adjacent the entrance area 26a, 26b. As shown in figures 3 and 4, a mechanical trap may be held by clips 34 projecting from a side of the catching area 24 adjacent a side wall 16a, 16b. The clips 34 are tabs that are insertable into corresponding slots in the mechanical traps. The plurality of clips 34 are spaced apart. The spaces 36 between the clips 34 allow the clips 34 to be received within slots of mechanical traps, with portions of the traps fitting between the clips 34. Each clip 34 projects from a strip 38 that extends along a side of the catching area 24 and is connectable to the base 12 and/or side wall 16a, 16b in a snap-fit connection. As shown in figure 1, a clip 34 at a position of a boss 32a, 32b comprises a cut-out portion for receiving the boss 32a, 34a.

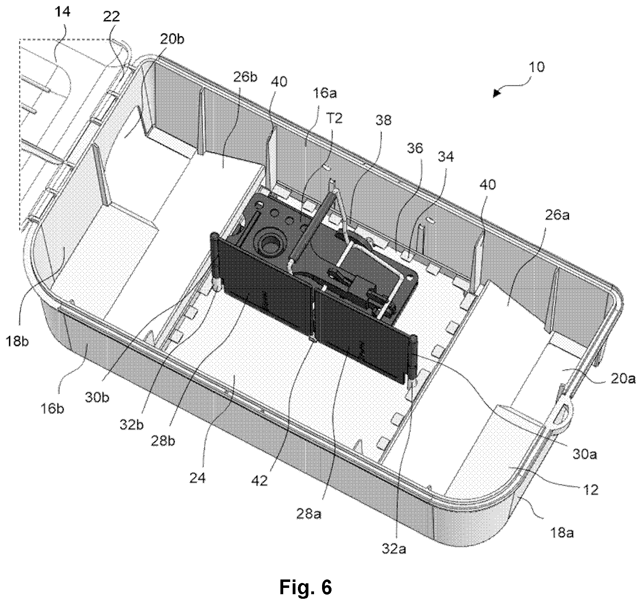

The sum of the width of the two guide walls 28a, 28b is substantially the length of the catching area 24, in the length direction, so that when the guide walls 28a, 28b are arranged in the length direction, as shown in figure 6, ends of the guide walls 28a, 28b distal to the posts 30a, 30b meet.

The sum of the width of the two guide walls 28a, 28b is less than the width of the catching area 24, in a direction perpendicular to the length direction. Hence, when the guide walls 28a, 28b are positioned in the width direction, there is a space between the distal end of the guide walls 28a, 28b and the side walls 16a, 16b. As shown in figures 1-4, ribs 40 project from the side walls 16a, 16b and provide a barrier between the side walls 16a, 16b and the distal ends of the guide walls 28a, 28b. As shown in figure 1, the ribs 40 may also block a space between the side of a mechanical trap and the guide wall. The ribs may extend up the height of the side walls 16a, 16b.

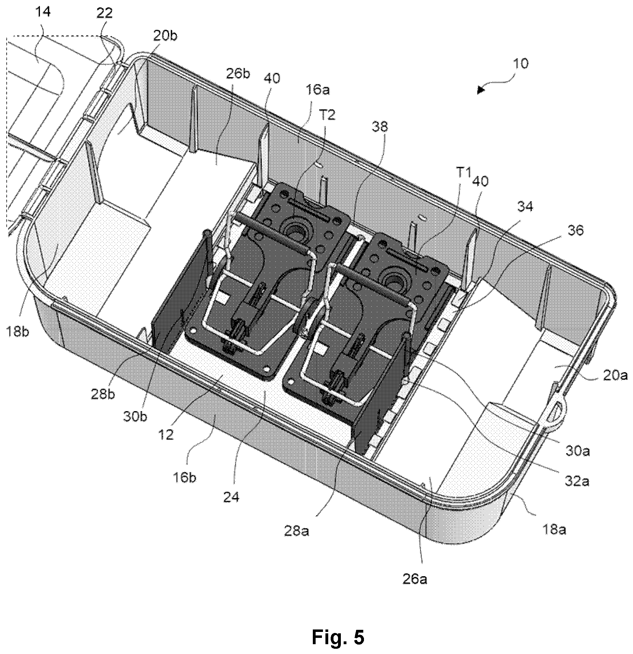

As shown in figure 6, the guide walls 28a, 28b may be used to separate the catching area 24 into zones. The catching area 24 may comprise a projection 42 from the base. The projection 42 may prevent the movable guide walls 28a, 28b from swinging when they are in the desired position. For example, as shown in figure 5, when the guide walls 28a, 28b extend across the length of the catching area, the projection 42 holds the guide walls 28a, 28b in position, preventing the guide walls 28a, 28b from moving into one of the zones.

In the examples shown in figures 1-6, the traps are mechanical traps, for example using a spring mechanism that, when triggered, kills the rodents. A conventional mechanical trap, as shown in figures 1-6, comprises a trigger portion and a rear portion. The trigger portion comprises a plate; when a rodent steps on the plate, the trap is triggered and the spring-loaded bar snaps from the rear portion over the plate to trap the rodent.

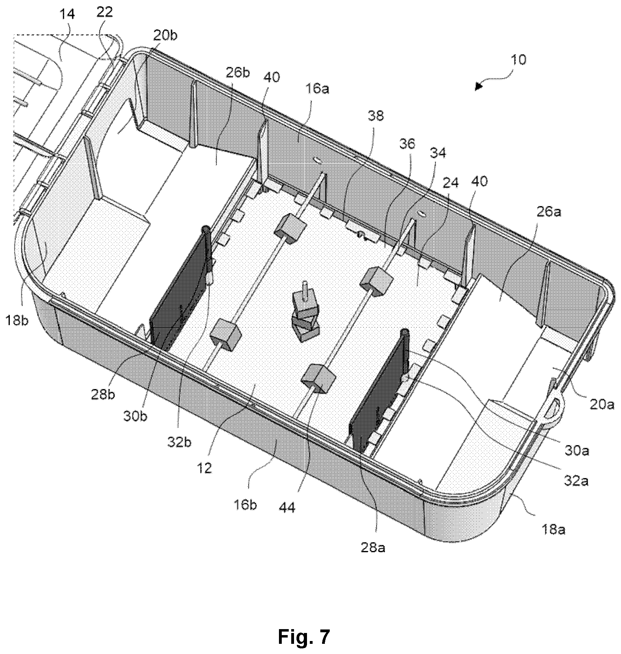

In other examples, the traps may comprise bait, as shown in figure 7, or glue traps. It will be understood that the particular type of trap employed will be varied according to the particular use of the rodent station 10, and that the rodent station 10 may comprise a combination of different trap types.

The catching area 24 of the rodent station 10 is recessed relative to the entrance area 26a, 26b, which may allow bait to be contained in the catching area 24.

The entrance areas 26a, 26b are ramped, increasing in height from the respective opening 20a, 20b towards the catching area 24. Mechanical traps may thereby sit in the recessed catching area 24 without a step change in height from the entrance area 26a, 26b to the trigger plate. The ramped entrance area 26a, 26b may prevent a step change in height from the opening 20a, 20b to the entrance area 26a, 26b.

Figures 2-7 show views of the rodent station 10 of figure 1, with part of the lid 14 not in view, to provide a more enlarged view of the interior of the rodent station 10. Figures 2-7 show a variety of configurations of the rodent station 10, with the movable guide walls 28a, 28b in different positions. Each of these configurations will be described in further detail below.

In figures 1 and 2, a first of the guide walls 28a is arranged facing the first opening 28a, whilst the second guide wall 28b off-set from the second opening 20b. The first and second mechanical traps T1, T2 are arranged in a head-on arrangement, such that the rodent will move onto the trap T1, T2 in a head-on direction. The first mechanical trap T1 is arranged along the second side wall 16b, with the trigger portion to the side of the first guide wall 28a, whilst the second mechanical trap T2 is arranged along the first side wall 16a, with the trigger portion facing the second opening 20b.

In use, a rodent entering the first opening 20a will be guided by the first guide wall 28a left through the entrance area to enter the catching area 24 where it will meet the trigger plate of the first mechanical trap T1. The first guide wall 28a will prevent the rodent entering the catching area 24 at a position where it would avoid the first trap T1 and access the rear part of the second trap T2. The first guide wall 28a also provides a barrier to the line of sight into the catching area 24 through the opening 20a, so that a rodent caught in the traps T1, T2 may not be visible through the opening 20a. The first guide wall 28a may also prevent non-target species from entering the catching area 24.

A rodent entering the second opening 20b may move directly forwards through the second entrance area 26b towards the trigger portion of the second trap T2, whilst the second guide wall 28b may prevent the rodent entering the catching area 24 at a position away from the trigger portion and accessing the rear of the first trap T1. Although the trap T2 may not be hidden by the second guide wall 28b, the second trap T2 may have a higher strike-rate, because rodents do not need to change direction in order to enter the catching area 24 but instead continue straight forwards upon entering the rodent station 10.

In figure 3, the guide walls 28a, 28b are provided in the same position as in figure 1, but the mechanical traps T1 and T2 are rotated by 90 degrees. The rear portion of the first trap T1 is provided behind the first guide wall 28a, whilst the trigger portion is adjacent the second side wall 16b. The rear portion of the second trap T2 is provided behind the second guide wall 28b, whilst the trigger portion is adjacent the first side wall 16a.

In use, the rodent may enter the first entrance area 26a through the first opening 20a and will be guided left by the first guide wall 28a to enter the catching area 24 where it will meet the trigger plate of the first mechanical trap T1 side-on. The first guide wall 28a will prevent the rodent entering the catching area 24 from a location away from the trigger plate and accessing the rear part of the first trap T1.

A rodent entering the second opening 20b may move directly forwards towards the trigger portion of the second trap T2, whilst the second guide wall 28b may prevent the rodent entering the catching area 24 at a position away from the trigger portion and accessing the rear of the second trap T2.

The configurations of figures 2 and 3, with the combination of having a trap T1 that is not visible through the first opening 20a and the trap T2 which does not require a change of direction of the rodent may be used when the rodent station 10 is positioned so that the first opening 20a is in view to people but the second opening 20b is away from people's view, for example towards a corner of building.

In the arrangement shown in figures 2 and 3, the first guide wall 28a is provided in front of the first opening 20a whilst the second guide wall 28b is provided away from the second opening 20b. It should be appreciated that in other configurations, the traps T1, T2 in figures 1 and 2 may be rotated by 180 degrees, and the guide walls may be rotated by 180 degrees, so that the first guide wall 28a is provided away from the first opening 20a and the second guide wall 28b is provided in front of the second opening 20b.

In figure 4, the first guide wall 28a is arranged facing the first opening 20a, and the second guide wall 28b is arranged facing the second opening 20b. The first and second mechanical traps T1, T2 are arranged with the trigger portion of the first trap T1 at the entry to the catching area 24 from the first entrance area 26a and the rear portion behind the first guide wall 28a and the second trap T2 positioned with the trigger portion at the entry to the catching area 24 from the second entrance area 26b and the rear portion behind the second guide wall 28b. The trigger end of each of the traps T1, T2 is coupled to clips (not shown) projecting from the second side wall 16b. In the configuration shown in figure 3, rodents will move onto the trigger portion of the trap in a side-on direction.

In the example shown in figure 4, a rodent entering the first opening 20a will be guided towards the second side wall 16b by the guide wall 28a to enter the catching area 24 at the trigger portion of the first trap T1. A rodent entering the second opening 20b will be guided to the second side wall 16b by the guide wall 28b to enter the catching area 24 at the trigger portion of the second trap T2.

Each of the guide walls 28a, 28b being positioned to face the openings 20a, 20b may hide the catching area 24 from view through the openings, so that people may not be able to see a caught rodent in the catching area 24. In addition, the arrangement of the guide walls 28a, 28b may inhibit non-target species from entering the catching area 24. This configuration may be particularly suitable in sensitive areas, wherein there may be more people and/or more non-target species.

In the configuration shown in figure 5, each of the first guide wall 28a and the second guide wall 28b has rotated by 180 degrees compared to the arrangement shown in figure 3. Each of the first and second guide wall 28a, 28b extend from the post 30a, 30b towards the second side wall 16b. The mechanical traps T1, T2 are arranged with the trigger end of each of the traps connected to clips 34 projecting from the first side wall 16a.

In the configuration shown in figure 5, a rodent entering the first opening 20a will continue to move forwards into the catching area 24 and onto the trigger portion of the first trap T1. The first guide wall 28a will prevent the rodent from entering the catching area 24 at the rear portion of the first trap T1. Similarly, a rodent entering the second opening 20b will continue to move forwards into the catching area 24 and onto the trigger portion of the second trap T2. The second guide wall 28b will prevent the rodent from entering the catching area 24 at the rear portion of the second trap T2.

In the configuration shown in figure 5, when rodents enter the rodent station 10, a change of direction is not required of the rodents to enter the catching area 24 and move onto a trigger plate. This may provide a higher catch rate of rodents, and so may be particularly useful in a non-sensitive area.

In the example shown in figure 6, the guide walls 28a, 28b are rotated 90 degrees compared to the arrangements in figures 1 to 4, and extend across the length of the catching area 24. The guide walls 28a, 28b thereby partition the catching area 24 into two zones. In a first zone, between the guide walls 28a, 28b and the first side wall 16a, the trap T2 is positioned with the trigger end facing the second opening 20b, with the trigger end coupled to clips 34 projecting into the catching area 24 from the edge between the second entrance area 26b and the catching area 24. In a second zone of the catching area 24, between the guide walls 28a, 28band the second side wall 16b, a trap is not present and instead the second zone may be filled with a bait (not shown). The configuration shown in figure 5 thereby allows the rodent station to combine a mechanical trap and a bait trap.

As shown in figure 7, instead of one or more mechanical traps, block bait may be provided in the catching area 24. In other examples, grain bait may be provided in the catching area 24.

The rodent station is therefore configurable according to an environment and setting, by moving the guide walls and positioning the traps in different arrangements.

## Claims

1. A rodent station (10) comprising:
at least one opening (20a/20b);
a catching area (24) configured to receive at least one trap;
an entrance area (26a/26b) between the opening (20a/20b) and the catching area (24); and
at least one guide wall (28a/28b) configured to provide a path through the entrance area (26a/26b) from the opening (20a/20b) into the catching area (24),
wherein the at least one guide wall (28a/28b) is movable, to alter the path into the catching area (24),
wherein the guide wall (28a/28b) is removably connectable to a base (12) of the rodent station,
**characterised in that**
the guide wall (28a/28b) comprises a post (30a/30b), wherein a first end of the post (30a/30b) is removably insertable into a boss (32a/32b) that projects from the base (12) of the rodent station (10), and
wherein the post (30a/30b) is a pivot post, wherein the post (30a/30b) is rotatable relative to the boss (32a/32b) and/or the guide wall (28a/28b) is pivotable relative to the pivot post.

2. The rodent station according to claim 1, wherein the at least one guide wall is providable in a first position and a second position,
wherein in the first position the guide wall faces the opening to provide a bent path from the opening to the catching area, and
wherein in the second position the at least one guide is offset from the opening to provide a linear path from the opening to the catching area.

3. The rodent station according to claim 2, wherein the catching area is provided between first and second side walls of the rodent station, and wherein at least one rib projects from the first side wall and forms a barrier between the first side wall and an edge of the guide wall when the guide wall is in the first position, and wherein a second rib projects from the second side wall and forms a barrier between the second side wall and the edge of the guide wall when the guide wall is in the second position.

4. The rodent station according claim 2 or claim 3, wherein the at least one movable guide wall is providable in a third position, wherein in the third position, the at least one guide wall extends in a length direction of the catching area to partition the catching area into first and second zones.

5. The rodent station according to any of claims 2 to 4, wherein the rodent station comprises two movable guide walls and two openings, wherein the first guide wall is configured to provide a path from the first opening to the catching area, and the second guide wall is configured to provide a path from the second opening to the catching area.

6. The rodent station according to claim 5, wherein in a first configuration, the first guide wall is arranged in the first position and the second guide wall is arranged in the second position.

7. The rodent station according to claim 5 or claim 6, wherein in a second configuration, the first guide wall and the second guide wall are each arranged in the first position.

8. The rodent station according to any of claims 5 to 7, wherein in a third configuration, the first guide wall and the second guide wall are each arranged in the second position.

9. The rodent station according to any of claims 5 to 8, wherein in a fourth configuration, the first guide wall and the second guide wall are each arranged in the third position.

10. The rodent station according to any preceding claim, wherein the at least one guide wall is configured to pivot between positions, to alter the path into the catching area.

11. The rodent station according to claim 1, wherein the rodent station comprises a plurality of bosses projecting from the base, wherein each of the bosses are configured to receive the second end of the post.

12. The rodent station according to any preceding claim, wherein a lid of the rodent station comprises at least one slot for receiving an upper edge of the at least one guide wall when the lid is closed, for preventing movement of the guide wall.

## Patentansprüche

1. Nagetierstation (10), die Folgendes umfasst:
mindestens eine Öffnung (20a/20b);
einen Fangbereich (24), der dazu ausgelegt ist, mindestens eine Falle aufzunehmen;
einen Eingangsbereich (26a/26b) zwischen der Öffnung (20a/20b) und dem Fangbereich (24); und
mindestens eine Führungswand (28a/28b), die dazu ausgelegt ist, einen Pfad durch den Eingangsbereich (26a/26b) von der Öffnung (20a/20b) in den Fangbereich (24) bereitzustellen,
wobei die mindestens eine Führungswand (28a/28b) bewegbar ist, um den Pfad in den Fangbereich (24) zu ändern,
wobei die Führungswand (28a/28b) entfernbar mit einer Basis (12) der Nagetierstation verbindbar ist, **dadurch gekennzeichnet, dass** die Führungswand (28a/28b) einen Pfosten (30a/30b) umfasst, wobei ein erstes Ende des Pfostens (30a/30b) entfernbar in einen Vorsprung (32a/32b) einsetzbar ist, der von der Basis (12) der Nagetierstation (10) vorsteht, und
wobei der Pfosten (30a/30b) ein Schwenkpfosten ist, wobei der Pfosten (30a/30b) relativ zu dem Vorsprung (32a/32b) drehbar ist und/oder die Führungswand (28a/28b) relativ zu dem Schwenkpfosten schwenkbar ist.

2. Nagetierstation nach Anspruch 1, wobei die mindestens eine Führungswand in einer ersten Position und einer zweiten Position bereitgestellt werden kann,
wobei in der ersten Position die Führungswand der Öffnung zugewandt ist, um einen gebogenen Pfad von der Öffnung zu dem Fangbereich bereitzustellen, und
wobei in der zweiten Position die mindestens eine Führung von der Öffnung versetzt ist, um einen linearen Pfad von der Öffnung zu dem Fangbereich bereitzustellen.

3. Nagetierstation nach Anspruch 2, wobei der Fangbereich zwischen einer ersten und einer zweiten Seitenwand der Nagetierstation bereitgestellt ist und wobei mindestens eine Rippe von der ersten Seitenwand vorsteht und eine Barriere zwischen der ersten Seitenwand und einer Kante der Führungswand bildet, wenn sich die Führungswand in der ersten Position befindet, und wobei eine zweite Rippe von der zweiten Seitenwand vorsteht und eine Barriere zwischen der zweiten Seitenwand und dem Rand der Führungswand bildet, wenn sich die Führungswand in der zweiten Position befindet.

4. Nagetierstation nach Anspruch 2 oder Anspruch 3, wobei die mindestens eine bewegbare Führungswand in einer dritten Position bereitgestellt werden kann, wobei sich in der dritten Position die mindestens eine Führungswand in einer Längsrichtung des Fangbereichs erstreckt, um den Fangbereich in eine erste und eine zweite Zone zu unterteilen.

5. Nagetierstation nach einem der Ansprüche 2 bis 4, wobei die Nagetierstation zwei bewegbare Führungswände und zwei Öffnungen umfasst, wobei die erste Führungswand dazu ausgelegt ist, einen Pfad von der ersten Öffnung zu dem Fangbereich bereitzustellen, und die zweite Führungswand dazu ausgelegt ist, einen Pfad von der zweiten Öffnung zu dem Fangbereich bereitzustellen.

6. Nagetierstation nach Anspruch 5, wobei in einer ersten Auslegung die erste Führungswand in der ersten Position und die zweite Führungswand in der zweiten Position angeordnet ist.

7. Nagetierstation nach Anspruch 5 oder Anspruch 6, wobei in einer zweiten Auslegung die erste Führungswand und die zweite Führungswand jeweils in der ersten Position angeordnet sind.

8. Nagetierstation nach einem der Ansprüche 5 bis 7, wobei in einer dritten Auslegung die erste Führungswand und die zweite Führungswand jeweils in der zweiten Position angeordnet sind.

9. Nagetierstation nach einem der Ansprüche 5 bis 8, wobei in einer vierten Auslegung die erste Führungswand und die zweite Führungswand jeweils in der dritten Position angeordnet sind.

10. Nagetierstation nach einem der vorhergehenden Ansprüche, wobei die mindestens eine Führungswand dazu ausgelegt ist, zwischen Positionen zu schwenken, um den Pfad in den Fangbereich zu ändern.

11. Nagetierstation nach Anspruch 1, wobei die Nagetierstation mehrere Vorsprünge umfasst, die von der Basis vorstehen, wobei jeder der Vorsprünge dazu ausgelegt ist, das zweite Ende des Pfostens aufzunehmen.

12. Nagetierstation nach einem der vorhergehenden Ansprüche, wobei ein Deckel der Nagetierstation mindestens einen Schlitz zum Aufnehmen einer oberen Kante der mindestens einen Führungswand umfasst, wenn der Deckel geschlossen ist, um eine Bewegung der Führungswand zu verhindern.

## Revendications

1. Poste d'appâtage pour rongeurs (10) comprenant :
au moins une ouverture (20a/20b) ;
une zone de capture (24) conçue pour recevoir au moins un piège ;
une zone d'entrée (26a/26b) entre l'ouverture (20a/20b) et la zone de capture (24) ; et
au moins une paroi de guidage (28a/28b) conçue pour fournir un chemin à travers la zone d'entrée (26a/26b) depuis l'ouverture (20a/20b) dans la zone de capture (24),
l'au moins une paroi de guidage (28a/28b) étant mobile, pour modifier le chemin dans la zone de capture (24),
la paroi de guidage (28a/28b) pouvant être reliée amovible à une base (12) du poste d'appâtage pour rongeurs, **caractérisé en ce que** la paroi de guidage (28a/28b) comprend un montant (30a/30b), une première extrémité du montant (30a/30b) pouvant être insérée amovible dans un bossage (32a/32b) qui fait saillie de la base (12) du poste d'appâtage pour rongeurs (10), et
le montant (30a/30b) étant un montant pivotant, le montant (30a/30b) pouvant tourner par rapport au bossage (32a/32b) et/ou la paroi de guidage (28a/28b) pouvant pivoter par rapport au montant pivotant.

2. Poste d'appâtage pour rongeurs selon la revendication 1, l'au moins une paroi de guidage pouvant être fournie dans une première position et une deuxième position,
dans la première position, la paroi de guidage faisant face à l'ouverture pour fournir un chemin courbé depuis l'ouverture jusqu'à la zone de capture, et
dans la deuxième position, l'au moins un guide étant décalé par rapport à l'ouverture pour fournir un chemin linéaire depuis l'ouverture jusqu'à la zone de capture.

3. Poste d'appâtage pour rongeurs selon la revendication 2, la zone de capture étant située entre les première et seconde parois latérales du poste d'appâtage pour rongeurs, et au moins une nervure faisant saillie de la première paroi latérale et formant une barrière entre la première paroi latérale et un bord de la paroi de guidage lorsque la paroi de guidage est dans la première position, et une seconde nervure faisant saillie de la seconde paroi latérale et formant une barrière entre la seconde paroi latérale et le bord de la paroi de guidage lorsque la paroi de guidage est dans la deuxième position.

4. Poste d'appâtage pour rongeurs selon la revendication 2 ou la revendication 3, l'au moins une paroi de guidage mobile pouvant être disposée dans une troisième position, dans la troisième position, l'au moins une paroi de guidage s'étendant dans une direction de longueur de la zone de capture pour diviser la zone de capture en première et seconde zones.

5. Poste d'appâtage pour rongeurs selon l'une quelconque des revendications 2 à 4, le poste d'appâtage pour rongeurs comprenant deux parois de guidage mobiles et deux ouvertures, la première paroi de guidage étant conçue pour fournir un chemin depuis la première ouverture jusqu'à la zone de capture, et la seconde paroi de guidage étant conçue pour fournir un chemin depuis la seconde ouverture jusqu'à la zone de capture.

6. Poste d'appâtage pour rongeurs selon la revendication 5, dans une première configuration, la première paroi de guidage étant située dans la première position et la seconde paroi de guidage étant située dans la deuxième position.

7. Poste d'appâtage pour rongeurs selon la revendication 5 ou la revendication 6, dans une deuxième configuration, la première paroi de guidage et la seconde paroi de guidage étant chacune disposées dans la première position.

8. Poste d'appâtage pour rongeurs selon l'une quelconque des revendications 5 à 7, dans une troisième configuration, la première paroi de guidage et la seconde paroi de guidage étant chacune disposées dans la deuxième position.

9. Poste d'appâtage pour rongeurs selon l'une quelconque des revendications 5 à 8, dans une quatrième configuration, la première paroi de guidage et la seconde paroi de guidage étant chacune disposées dans la troisième position.

10. Poste d'appâtage pour rongeurs selon l'une quelconque des revendications précédentes, l'au moins une paroi de guidage étant conçue pour pivoter entre des positions, afin de modifier le chemin dans la zone de capture.

11. Poste d'appâtage pour rongeurs selon la revendication 1, le poste d'appâtage pour rongeurs comprenant une pluralité de bossages faisant saillie de la base, chacun des bossages étant conçu pour recevoir la seconde extrémité du montant.

12. Poste d'appâtage pour rongeurs selon l'une quelconque des revendications précédentes, un couvercle du poste d'appâtage pour rongeurs comprenant au moins une fente pour recevoir un bord supérieur de l'au moins une paroi de guidage lorsque le couvercle est fermé, pour empêcher le mouvement de la paroi de guidage.
